# EUROPEAN PATENT SPECIFICATION

(11) **EP 1 694 114 B1**
(45) Date of publication and mention of the grant of the patent: **07.07.2010**
(21) Application number: 04820552.0
(22) Date of filing: 13.12.2004
(51) Int. Cl.: A01J 5/013, A01J 7/02

(54) **METHOD OF CALIBRATING CONDUCTIVITY METERS**
VERFAHREN ZUR KALIBRIERUNG VON LEITFÄHIGKEITSMESSVORRICHTUNGEN
PROCEDE PERMETTANT D'ETALONNER DES CONDUCTIVIMETRES

(30) Priority: 17.12.2003 SE 0303393
(43) Date of publication of application: 30.08.2006
(73) Proprietor: DeLaval Holding AB, 147 21 Tumba (SE)
(72) Inventor: BOSMA, Epke, S-153 94 Tumba (SE)
(74) Representative: Keijser Bergöö, Malin Katarina
(86) International application number: PCT/SE2004/001851
(87) International publication number: WO 2005/058023

(56) References cited:
- WO-A1-00/19807
- WO-A1-01/19170
- DE-A1- 19 953 700
- US-A- 3 664 306

## Description

### TECHNICAL FIELD OF THE INVENTION

The present invention relates generally to dairy farming, and more specifically to methods of calibrating conductivity meters. The invention relates also to a computer program product for performing the methods of calibrating conductivity meters, to a computer provided with the computer program product, and to a milking system including the computer.

### DESCRIPTION OF RELATED ART AND BACKGROUND OF THE INVENTION

A major cause of loss in dairy farming is an infection, known as mastitis, which occurs in an animal's udder. Mastitis is caused by contagious pathogens invading the udder and producing toxins that are harmful to the mammary glands. Generally, mastitis starts in one udder quarter.

One of the methods of detecting mastitis is based on measuring changes in the electrical conductivity of milk, as generally, ion concentration, and thus electrical conductivity, in mastitic milk is higher than in normal milk. Electrical conductivity is generally measured with a DC or AC circuit having a probe positioned in the flow of milk. The most sensitive part of this on-line method is the probe. The probe generally includes two electrodes to which an AC or DC current is supplied to create an electrical circuit through the milk. The conductivity of the milk is evaluated by measuring the current variations in the circuitry that includes the probe. However, the readings can be inaccurate due to e.g. deposits of colloidal materials from the milk on the electrodes. Different aspects on milk conductivity measurements have been patented, see e.g. U.S. Pat. Nos. 3,762,371; 5,416,417; 5,302,903; 6,307,362 B1; and 6,378,455 B1; and European patent specifications Nos. 0 713 641 B1, and 0 761 091 B1.

EP 0 761 091 B1 discloses a method of rinsing a milk line system with a cleaning fluid comprising a solvent, which method is characterized by the steps of determining the concentration of solvent in the milk line system during post-rinsing, comparing the determined concentration with a predetermined minimum value, and ending the post-rinsing when the minimum value has been reached. The method further comprises the steps of rinsing the milk line system with a calibration fluid containing a concentration of solvent known beforehand, comparing this calibration value with the value of solvent measured in the milk line system, and calibrating the electric conductivity measuring means when the measured value deviates from the calibration value.

### SUMMARY OF THE INVENTION

A problem using the calibration method as disclosed in EP 0 761 091 B1 is that a calibration fluid containing a concentration of solvent, which is known beforehand, is required. Further, an additional fluid for the sole purpose of calibration has to be flowed through the milk line system. This is time consuming and costly.

An object of the present invention is thus to provide a method of calibrating conductivity meters in a milking system, which lacks the drawbacks and limitations associated with the prior art calibration method described above.

It is further object of the invention to provide such a method, which is reliable, flexible, of fairly low cost, and relatively easy to implement in existing milking systems.

These objects, among others, are according to the present invention attained by methods as specified in the appended patent claims.

The present invention comprises a method of calibrating conductivity meters in a milking system, wherein milk as drawn from each teat of a milking animal during milking is passed a respective one of the conductivity meters to obtain a conductivity value of the milk from each teat; and a cleaning fluid is passed the conductivity meters during cleaning of the milking system, wherein the conductivity meters are calibrated relative to each other by use of conductivity values of the cleaning fluid as obtained from the conductivity meters during cleaning of the milking system.

Hereby, no particular calibration fluid with a known conductivity value is needed, and the calibration can be performed concurrently with the cleaning of the milking system. The latter fact is particularly important in an automated milking system wherein the milking system is more or less continuously used throughout' the day and wherein any unnecessary shutdowns may lead to a lower milk production.

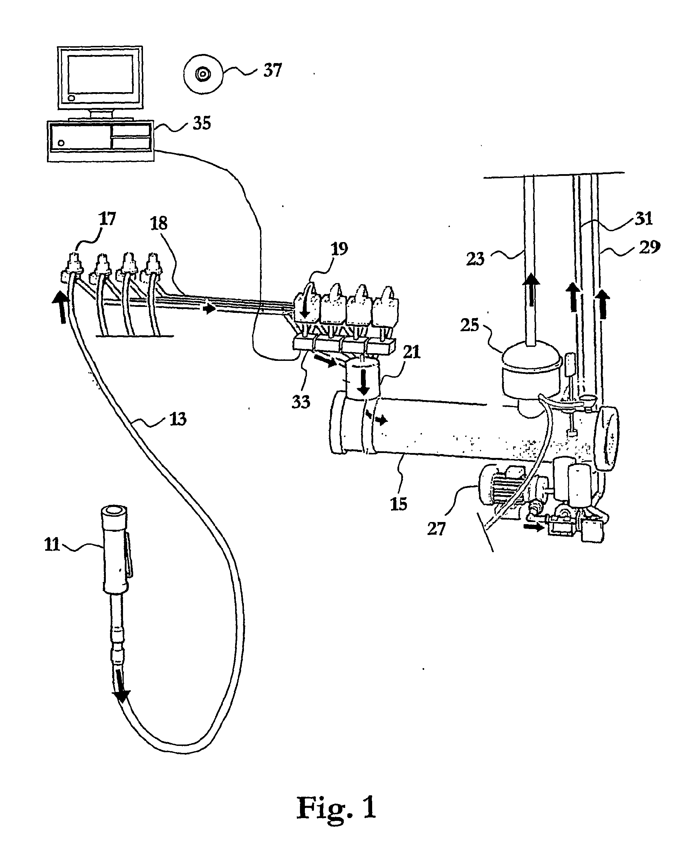

Further characteristics of the invention, and advantages thereof, will be evident from the following detailed description of preferred embodiments of the present invention given hereinafter and the accompanying Figs. 1-2, which are given by way of illustration only, and thus are not limitative of the present invention.

In the following detailed description the milk producing animals are cows. However, the invention is not limited to cows, but is applicable to any kind of animals having the capability to produce milk.

### BRIEF DESCRIPTION OF THE DRAWINGS

Fig. 1 illustrates schematically, in a perspective view, main components of a milking system, wherein a preferred embodiment of the present invention is implemented.
Fig. 2 is a diagram of true electric conductivity versus electric conductivity as measured by a conductivity meter comprised in the milking system of Fig. 1.

### DETAILED DESCRIPTION OF EMBODIMENTS

Fig. 1 illustrates some of the main components of an automated milking system for cows wherein the present invention is implemented. The automated milking system comprises four teat cups 11, of which only one is illustrated for sake of simplicity. Each teat cup 11 is connected to a respective milk tube 13, which in turn is connected to an end unit 15 via a respective valve or regulator 17, a respective milk conduit 18, a respective flow meter 19, a respective conductivity meter 33, optionally a respective other measuring device such as an infrared spectrometer device (not shown), and a common milk meter 21. The end unit 15 is connected to a vacuum source (not illustrated) via a milk/air separator 25 and a vacuum supply conduit 23.

During milking of the teats of a cow, the teat cups are attached to the teats of a cow, typically by a robot arm (not illustrated), and vacuum is supplied to the end unit 15 via the vacuum supply conduit 23 to draw milk from the teats of the cow, through the milk lines 13 and into the end unit 15. The valves or regulators 17 may be used to control the individual vacuum levels in the teat cups 11. The milk from each udder quarter of the cow is measured individually by the flow meters 19 and the conductivity meters 33, after which the weight of the milk from the cow is measured by the common milk meter 21. Finally, the milk is collected in the end unit 15 and the air is sucked out through the conduit 23.

Further, the automated milking system comprises a pump and regulator system 27 for pumping the milk to e.g. a larger milk storage tank (not illustrated) via one 29 of a plurality of milk output lines 29, 31 connected to the end unit. Another milk output line 31 may be used for discarding milk from the milking of a cow, for pumping the milk to another tank, or for pumping the milk to a feed device for feeding calves.

The milking machine is advantageously connected to a computer-based processing and control device 35, which is responsible for processing and controlling of the milking machine, and comprises typically a microcomputer, suitable software, and a database including information of each of the cows milked by the milking machine, such as e.g. when the respective cow was milked last time, when she was fed last time, her milk production, her health, etc.

Further, the automated milking system is typically cleaned by flowing a cleaning fluid through the milking system. During such cleaning, the cleaning fluid is typically circulated in the system, either in a forward flush kind of manner, or in a back flush kind of manner, whereupon the cleaning fluid is passed the conductivity meters 33. A pre-cleaning fluid and a post-cleaning fluid, which both may advantageously be comprised of pure water, may be flowed through the milking system before and after the circulation of the cleaning fluid to rinse the system. Such cleaning of the milking system may typically be performed three times per day.

The present invention presents a novel method of calibrating the conductivity meters 33 *without* the use of a calibration fluid with a known conductivity value. According to the present invention the conductivity meters 33 are calibrated relative to each other by use of conductivity values of the cleaning fluid as obtained from the conductivity meters 33 during the cleaning of the milking system. An absolute calibration is typically not possible to be performed, but many times this is not needed since mastitis usually starts in a single udder quarter of the cow. Therefore, a relative comparison of the conductivity values of the conductivity meters 33 would in many instances be sufficient.

By absolute calibration of a conductivity meter is here meant actions, which are performed under specified conditions to establish the relation between a conductivity meter or its response (measured conductivity value) and the corresponding known conductivity value.

By calibration of a plurality of conductivity meters relative to *each other* is here meant actions, which are performed to ensure that the plurality of conductivity meters are all indicating the same signal value for a given conductivity irrespective whether this signal value indicates correctly the absolute value of the given conductivity.

The result of the calibration of each conductivity meter 33 can be given as scale marks for a needle, as a term or factor used to modify future measured conductivity values, or as a calibration curve y = f(x), which relates a measured conductivity value y to the true conductivity value x. The calibration may accordingly aim at adjusting the complete relation, or only at adjusting e.g. the zero point of the conductivity meter.

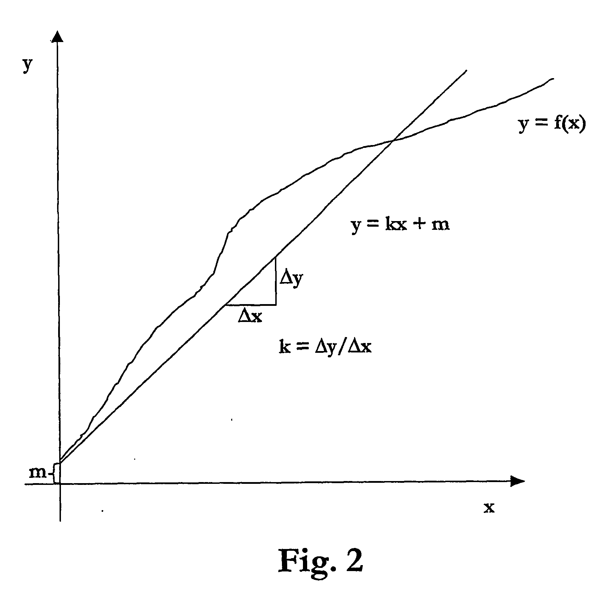

In Fig. 2 such a calibration curve y = f(x) is schematically illustrated together with a typical linear calibration curve y = kx + m of a conductivity meter.

The calibration of the conductivity meters 33 relative to each other comprises preferably the steps of comparing the conductivity values of the cleaning fluid with each other, and if the conductivity values of the cleaning fluid are different, adjusting the response, i.e. the response to a conductivity change in the measured fluid, or the offset of at least one of the conductivity meters so that they all will indicate the same conductivity value of the cleaning fluid. Provided that the relationship between the measured y and true x conductivity values is linear, the response is equal to k = Δy/Δx, and the offset is equal to m.

In one embodiment, each of the conductivity meters 33, which indicates a conductivity value, which differs from the mean value of the four conductivity values of the cleaning fluid as obtained from the conductivity meters 33 during the cleaning of the milking system, is calibrated - either by adjusting its response or its offset - so that it will indicate the mean value after the calibration.

If both the response and the offset shall be adjusted during calibration, a further fluid has to be measured. In this respect the conductivity of the post- or pre-cleaning fluid can be monitored during post- or pre-cleaning. Typically, the cleaning fluid has a conductivity, which is higher than that of milk, whereas the post- or pre-cleaning fluid has a conductivity, which is lower than that of milk. Conductivity values may be about 10 mS/cm for the cleaning fluid, about 5 mS/cm for milk, and about 0.5 mS/cm for the post- or pre-cleaning fluid provided that the latter is pure water.

Thus, by monitoring the conductivity of the post- or pre-cleaning fluid during post- or pre-cleaning, and the conductivity of the cleaning fluid during cleaning by the cleaning fluid by means of the four conductivity meters 33, both the response k and the offset m can be adjusted. Preferably, the measured conductivity values of the post- or pre-cleaning fluid are used to indicate zero point conductivity values, i.e. to adjust the offset m, of the conductivity meters 33, whereas the measured conductivity values of the cleaning fluid are used to adjust the response k of the conductivity meters 33.

It shall be appreciated that the calibration does not have to be performed each time the automated milking system is cleaned. Preferably, the calibration is performed more rarely.

Any of the methods of calibrating conductivity meters as depicted herein may be used in combination with a method of indicating mastitis, wherein the conductivity values of the milk from each teat are compared between themselves and mastitis is indicated depending on the outcome of the comparison. Preferably, but not exclusively, mastitis is indicated for the teat from which the milk is drawn, which has the highest conductivity value, provided that this highest conductivity value is at least a certain percentage, e.g. 15 %, higher than (i) the lowest conductivity value, (ii) the second lowest conductivity value, or (iii) an average of the two lowest conductivity values of the conductivity values obtained from the milk drawn from the teats of the milking animal.

However, the present invention does not preclude that there exist methods for indicating mastitis depending on absolute conductivity values as obtained from the conductivity meters 33 during milking. To this end, it shall be appreciated that the present invention may be combined with any kind of absolute calibration method. Here, the relative calibration as described above is advantageously performed at a first frequency, whereas the more demanding absolute calibration is performed more rarely (i.e. at a second frequency lower than the first frequency).

If mastitis is indicated, this may trigger various actions to be performed such as e.g. the entering of a note in the database held by the processing and control device 35; the sending of an alarm to a farmer in order for him/her to give the cow in question treatment; the initiation of a device for automatically treat a cow to treat the cow in question; the discarding of milk drawn from the cow in question via output line 31; the immediate interrupting of the milking of the cow in question; and/or the cleaning of the automated milking system.

An advantage of the relative calibration methods of the present invention is that they can be performed concurrently with the cleaning of the milking system, and thus no additional and costly shutdowns of the automated milking system for calibration are required.

Further, the conductivity meters 33 may be used to establish the quality of cleaning of the automated milking system, or as an indicator as to when cleaning of the automated milking system is ready. A pre-cleaning and post-cleaning fluid, which has a conductivity other than that of the cleaning fluid and that of milk, and a cleaning fluid, which has a conductivity other than that of milk, are used. The conductivity is monitored during the cleaning by means of the conductivity meters 33; this monitored conductivity is compared with one or several cleaning reference conductivity values; and based on the outcome of the comparison, the pre-cleaning, cleaning, or post-cleaning is finished or the quality thereof is indicated. If the conductivity of the pre-cleaning and post-cleaning fluid is similar to that of the cleaning fluid or that of milk, or if the conductivity of the cleaning fluid is similar to that of milk, a given amount of ions may be added to the pre-cleaning and post-cleaning fluid or to the cleaning fluid.

The various methods of the present invention can be implemented as a computer program product, e.g. on a compact disc 37, which is loadable into the internal memory of the computer-based processing and control device 35. The computer program product comprises software code portions for performing the various methods when the product is run on the computer-based processing and control device 35.

While the present invention has been described as being implemented in a particular kind of automated milking system, it shall be understood that the same may alternatively be implemented in other automated milking system, as well as in semi-automated or manual milking systems.

## Claims

1. A method of calibrating conductivity meters (33) in a milking system, wherein milk as drawn from each teat of a milking animal during milking is passed a respective one of said conductivity meters (33) to obtain a conductivity value of the milk from each teat; and a cleaning fluid is passed said conductivity meters during cleaning of said milking system, **characterized by** the step of calibrating said conductivity meters relative to each other by use of conductivity values of said cleaning fluid as obtained from said conductivity meters during the cleaning of said milking system without the use of a calibration fluid with a known conductivity value.

2. The method of claim 1 wherein said step of calibrating said conductivity meters relative to each other comprises the steps of comparing the conductivity values of said cleaning fluid with each other, and if the conductivity values of said cleaning fluid are different, adjusting the response (f(x); k) of at least one of said conductivity meters so that they all will indicate the same conductivity value of said cleaaning fluid.

3. The method of claim 2 wherein said response is substantially linear (k).

4. The method of claim 1 wherein said step of calibrating said conductivity meters relative to each other comprises the steps of comparing the conductivity values of said cleaning fluid with each other, and if the conductivity values of said cleaning fluid are different, adjusting the offset (m) of at least one of said conductivity meters so that they all are indicating the same conductivity value of said cleaaning fluid.

5. The method of any of claims 2-4 wherein said same conductivity value is a mean value of the conductivity values of said cleaning fluid as obtained from said conductivity meters during cleaning of said milking system.

6. The method of any of claims 1-5 wherein a post- or pre-cleaning fluid having a conductivity different from that of said cleaning fluid is passed said conductivity meters during cleaning of said milking system; and said step of calibrating said conductivity meters relative to each other is performed by also using conductivity values of said post- or pre-cleaning fluid as obtained from said conductivity meters during cleaning of said milking system.

7. The method of claim 6 wherein said step of calibrating said conductivity meters relative to each other comprises the steps of adjusting the response (f(x); k) and the offset (m) of at least one of said conductivity meters.

8. The method of claim 7 wherein the offset of said at least one of said conductivity meters is adjusted by using the conductivity value of the post- or pre-cleaning fluid as measured by said at least one of said conductivity meters, and the response of said at least one of said conductivity meters is adjusted by using the conductivity value of the cleaning fluid as measured by said at least one of said conductivity meters

9. The method of any of claims 6-8 wherein said post- or pre-cleaning fluid is comprised of water.

10. A method of calibrating conductivity meters and indicating mastitis in a milking system comprising the method of calibrating conductivity meters of any of claims 1-9, and the further steps of comparing the conductivity values of the milk from each teat between themselves and indicating mastitis depending on the outcome of said comparison.

11. The method of claim 10 wherein mastitis is indicated for the teat from which the milk is drawn, which has the highest conductivity value, provided that this highest conductivity value is at least a certain percentage higher than (i) the lowest conductivity value, (ii) the second lowest conductivity value, or (iii) an average of the two lowest conductivity values of the conductivity values obtained from the milk drawn from the teats of the milking animal.

12. A computer program product (37) loadable into the internal memory of a computer (35) comprising software code portions for performing the method of any of claims 1-11 when said product is run on said computer.

13. A computerized system (35) for controlling and monitoring a milking system, said computerized system being provided with the computer program product of claim 12.

14. An automated or semi-automated milking system for milking a plurality of milking animals, said automated or semi-automated milking system being provided with the computerized system of claim 13.

## Patentansprüche

1. Verfahren zur Kalibrierung von Leitfähigkeitsmessvorrichtungen (33) in einem Melksystem, wobei Milch, wie sie von jeder Zitze eines Melktiers während des Melkvorgangs erhalten wird, in eine entsprechende der Leitfähigkeitsmessvorrichtungen (33) gegeben wird, um einen Leitfähigkeitswert der Milch von jeder Zitze zu erhalten; und ein Reinigungsfluid während der Reinigung des Melksystems in die Leitfähigkeitsmessvorrichtungen gegeben wird, **gekennzeichnet durch** den Schritt des Kalibrierens der Leitfähigkeitsmessvorrichtungen in Bezug zueinander mittels Verwendung von Leitfähigkeitswerten des Reinigungsfluids, wie sie von den Leitfähigkeitsmessvorrichtungen während des Reinigens des Melksystems erhalten werden, ohne Verwendung eines Kalibrierungsfluids mit einem bekannten Leitfähigkeitswert.

2. Verfahren nach Anspruch 1, wobei der Schritt des Kalibrierens der Leitfähigkeitsmessvorrichtungen in Bezug zueinander die Schritte des Vergleichens der Leitfähigkeitsmesswerte des Reinigungsfluids miteinander umfasst, und wenn die Leitfähigkeitswerte des Reinigungsfluids unterschiedlich sind, des Anpassens des Ansprechverhaltens (f(x); k) mindestens einer der Leitfähigkeitsmessvorrichtungen, so dass sie alle den gleichen Leitfähigkeitswert des Reinigungsfluids anzeigen werden.

3. Verfahren nach Anspruch 2, wobei das Ansprechverhalten im Wesentlichen linear (k) ist.

4. Verfahren nach Anspruch 1, wobei der Schritt des Kalibrierens der Leitfähigkeitsmessvorrichtungen in Bezug zueinander die Schritte des Vergleichens der Leitfähigkeitsmesswerte des Reinigungsfluids miteinander umfasst, und wenn die Leitfähigkeitswerte des Reinigungsfluids unterschiedlich sind, des Anpassens des Versatzes (m) mindestens einer der Leitfähigkeitsmessvorrichtungen, so dass sie alle den gleichen Leitfähigkeitswert des Reinigungsfluids anzeigen.

5. Verfahren nach einem der Ansprüche 2 - 4, wobei der gleiche Leitfähigkeitswert ein Mittelwert der Leitfähigkeitswerte des Reinigungsfluids ist, wie sie von den Leitfähigkeitsmessvorrichtungen während des Reinigens des Melksystems erhalten werden.

6. Verfahren nach einem der Ansprüche 1 - 5, wobei ein Vor- oder Endreinigungsfluid, das eine Leitfähigkeit aufweist, die von der des Reinigungsfluids unterschiedlich ist, während des Reinigens des Melksystems in die Leitfähigkeitsmessvorrichtungen gegeben wird; und der Schritt des Kalibrierens der Leitfähigkeitsmessvorrichtungen in Bezug zueinander ausgeführt wird, indem ebenfalls Leitfähigkeitswerte des Vor- oder Endreinigungsfluids verwendet werden, wie sie von den Leitfähigkeitsmessvorrichtungen während des Reinigens des Melksystems erhalten werden.

7. Verfahren nach Anspruch 6, wobei der Schritt des Kalibrierens der Leitfähigkeitsmessvorrichtungen in Bezug zueinander die Schritte des Anpassens des Ansprechverhaltens (f(x); k) und des Versatzes (m) mindestens einer der Leitfähigkeitsmessvorrichtungen umfasst.

8. Verfahren nach Anspruch 7, wobei der Versatz der mindestens einen der Leitfähigkeitsmessvorrichtungen unter Verwendung des Leitfähigkeitswerts des Vor- oder Endreinigungsfluids angepasst wird, wie er von der mindestens einen der Leitfähigkeitsmessvorrichtungen gemessen wird, und das Ansprechverhalten der mindestens einen der Leitfähigkeitsmessvorrichtungen unter Verwendung des Leitfähigkeitswerts des Reinigungsfluids angepasst wird, wie er von der mindestens einen der Leitfähigkeitsmessvorrichtungen gemessen wird.

9. Verfahren nach einem der Ansprüche 6 - 8, wobei das Vor- oder Endreinigungsfluid aus Wasser besteht.

10. Verfahren zum Kalibrieren von Leitfähigkeitsmessvorrichtungen und zum Anzeigen einer Mastitis in einem Melksystem, umfassend das Verfahren des Kalibrierens der Leitfähigkeitsmessvorrichtungen nach einem der Ansprüche 1 - 9, und die weiteren Schritte des Vergleichens der Leitfähigkeitswerte der Milch von jeder Zitze zwischen ihnen und des Anzeigens einer Mastitis, abhängig von dem Ergebnis des Vergleichs.

11. Verfahren nach Anspruch 10, wobei eine Mastitis für die Zitze, von der die Milch erhalten wird, angezeigt wird, die den höchsten Leitfähigkeitswert aufweist, vorausgesetzt dass dieser höchste Leitfähigkeitswert mindestens einen gewissen Prozentsatz größer ist, als (i) der niedrigste Leitfähigkeitswert, (ii) der zweitniedrigste Leitfähigkeitswert oder (iii) ein Mittelwert der zwei niedrigsten Leitfähigkeitswerte der Leitfähigkeitswerte, die von der Milch erhalten werden, die von den Zitzen des Melktiers erhalten wird.

12. Computerprogrammprodukt (37), das in den internen Speicher eines Computers (35) geladen werden kann, umfassend Software-Code-Abschnitte zum Ausführen des Verfahrens eines der Ansprüche 1 - 11, wenn das Produkt auf dem Computer laufen gelassen wird.

13. Computerisiertes System (35) zum Steuern und Überwachen eines Melksystems, wobei das computerisierte System mit dem Computerprogrammprodukt nach Anspruch 12 bereitgestellt ist.

14. Automatisiertes oder halb-automatisiertes Melksystem zum Melken einer Mehrzahl von Melktieren, wobei das automatisierte oder halb-automatisierte Melksystem mit dem computerisierten System nach Anspruch 13 bereitgestellt ist.

## Revendications

1. Procédé permettant d'étalonner des conductivimètres (33) dans un système de traite, dans lequel du lait, lorsqu'il est prélevé de chaque trayon d'un animal de traite, pendant la traite, est passé dans un conductivimètre respectif desdits conductivimètres (33) pour obtenir une valeur de conductivité du lait provenant de chaque trayon ; et un fluide de nettoyage est passé dans lesdits conductivimètres pendant le nettoyage dudit système de traite, **caractérisé par** l'étape consistant à étalonner lesdits conductivimètres les uns par rapport aux autres en utilisant des valeurs de conductivité dudit fluide de nettoyage telles qu'obtenues desdits conductivimètres pendant le nettoyage dudit système de traite sans l'utilisation d'un fluide d'étalonnage avec une valeur de conductivité connue.

2. Procédé selon la revendication 1, dans lequel ladite étape consistant à étalonner lesdits conductivimètres les uns par rapport aux autres comprend les étapes consistant à comparer les valeurs de conductivité dudit fluide de nettoyage les unes avec les autres, et si les valeurs de conductivité dudit fluide de nettoyage sont différentes, ajuster la réponse (f(x); k) d'au moins l'un des conductivimètres de sorte qu'ils indiqueront tous la même valeur de conductivité dudit fluide de nettoyage.

3. Procédé selon la revendication 2, dans lequel ladite réponse est essentiellement linéaire (k).

4. Procédé selon la revendication 1, dans lequel ladite étape consistant à étalonner lesdits conductivimètres les uns par rapport aux autres comprend les étapes consistant à comparer les valeurs de conductivité dudit fluide de nettoyage les unes avec les autres, et si les valeurs de conductivité dudit fluide de nettoyage sont différentes, ajuster le décalage (m) d'au moins l'un des conductivimètres de sorte qu'ils indiquent tous la même valeur de conductivité dudit fluide de nettoyage.

5. Procédé selon l'une quelconque des revendications 2 à 4, dans lequel ladite même valeur de conductivité est une valeur moyenne des valeurs de conductivité dudit fluide de nettoyage telles qu'obtenues desdits conductivimètres pendant le nettoyage dudit système de traite.

6. Procédé selon l'une quelconque des revendications 1 à 5, dans lequel un fluide de post-nettoyage ou de pré-nettoyage présentant une conductivité différente de celle dudit fluide de nettoyage est passé dans lesdits conductivimètres pendant le nettoyage dudit système de traite ; et ladite étape consistant à étalonner lesdits conductivimètres les uns par rapport aux autres est effectuée en utilisant également des valeurs de conductivité dudit fluide de post-nettoyage ou de pré-nettoyage telles qu'obtenues desdits conductivimètres pendant le nettoyage dudit système de traite.

7. Procédé selon la revendication 6, dans lequel ladite étape consistant à étalonner lesdits conductivimètres les uns par rapport aux autres comprend les étapes consistant à ajuster la réponse (f(x); k) et le décalage (m) d'au moins l'un desdits conductivimètres.

8. Procédé selon la revendication 7, dans lequel le décalage dudit au moins un desdits conductivimètres est ajusté en utilisant la valeur de conductivité du fluide de post-nettoyage ou de pré-nettoyage telle que mesurée par ledit au moins un desdits conductivimètres, et la réponse dudit au moins un desdits conductivimètres est ajustée en utilisant la valeur de conductivité du fluide de nettoyage telle que mesurée par ledit au moins un desdits conductivimètres.

9. Procédé selon l'une quelconque des revendications 6 à 8, dans lequel ledit fluide de post-nettoyage ou de pré-nettoyage est constitué d'eau.

10. Procédé permettant d'étalonner des conductivimètres et d'indiquer une mastite dans un système de traite comprenant le procédé permettant d'étalonner des conductivimètres selon l'une quelconque des revendications 1 à 9, et les autres étapes consistant à comparer les valeurs de conductivité du lait provenant de chaque trayon entre elles et indiquer la mastite en fonction du résultat de ladite comparaison.

11. Procédé selon la revendication 10, dans lequel la mastite est indiquée pour le trayon duquel le lait est prélevé qui présente la valeur de conductivité la plus élevée, à la condition que cette valeur de conductivité la plus élevée soit au moins un certain pourcentage plus élevée que (i) la valeur de conductivité la plus faible, (ii) la seconde valeur de conductivité la plus faible, ou (iii) une moyenne des deux valeurs de conductivité les plus faibles des valeurs de conductivité obtenues du lait prélevé des trayons de l'animal de traite.

12. Produit programme informatique (37) pouvant être chargé dans la mémoire interne d'un ordinateur (35) comprenant des portions de code logiciel pour effectuer le procédé selon l'une quelconque des revendications 1 à 11 quand ledit produit est en marche sur ledit ordinateur.

13. Système informatisé (35) pour commander et surveiller un système de traite, ledit système informatisé étant pourvu du produit programme informatique selon la revendication 12.

14. Système de traite automatisé ou semi-automatisé pour traire une pluralité d'animaux de traite, ledit système de traite automatisé ou semi-automatisé étant pourvu du système informatisé selon la revendication 13.
